# EUROPEAN PATENT APPLICATION

(11) **EP 2 439 717 A1**
(43) Date of publication of application: **11.04.2012**
(21) Application number: 10177777.9
(22) Date of filing: 21.09.2010
(51) Int. Cl.: G09B 5/00, G09B 29/10

(54) **Wireless device for determining a route**

(71) Applicant: Sony Ericsson Mobile Communications AB, 221 88 Lund (SE)
(72) Inventor: Thörn, Karl Ola, 21145, Malmö (SE); Johansson, Magnus, 21429, Malmö (SE)
(74) Representative: VALEA AB

(57) **Abstract**

An object of the present invention is to provide an improved navigation by using known locations. The object is achieved by a method in a wireless device 110 for determining a route between a current location of the wireless device 110 and a destination location presented. The wireless device 110 establishes 310 the current location, and obtains 320 the destination location of the wireless device 110. The wireless device 110 then calculates 330 a route from the current location to the destination location. The route comprises a number of spots. Further the wireless device 110 obtains 340 one or more places relating to respective one or more of the spots along the calculated route. The one or more places have been registered as being visited by the wireless device (110). An alternative route is then created 350 by replacing one or more of the spots with a respective obtained visited place related to it, and by one or more spots between the current location and the replaced spots removed 360.

## Description

### TECHNICAL FIELD

The present invention relates to a method and an apparatus in a wireless device. In particular it relates to a method for determining a route between a current location and a destination location.

### BACKGROUND OF THE INVENTION

Today, the uses of electronic positioning devices for navigation are more increasing in numbers then ever. The electronic positioning system feature can be a device by itself, e.g. GPS (Geographical positioning system) device, which usually is placed in vehicles, or it may be a part of a wireless device. Such a positioning system may be used to navigate between locations. The user is presented with a turn by turn navigation based on the input of a starting location and a destination location. When using such a positioning system when driving it often takes much attention resources from watching the surrounding traffic, especially when driving through unfamiliar streets. When using such a system a database is used, which usually is large, involving the data that is requested in order to display and/or audibly present a very detailed route leading to the desired destination. This is very necessitating for the user as such a detailed route needs attention.

### SUMMARY OF THE INVENTION

Therefore it is an object of embodiments herein to provide a mechanism in a wireless device with a more efficient way of determining a route to a destination location.

According to a first aspect, the object is achieved by a method in a wireless device for determining a route between a current location of the wireless device and a destination location presented. The wireless device establishes the current location, and obtains the destination location of the wireless device. The wireless device then calculates a route from the current location to the destination location. The route comprises a number of spots. Further the wireless device obtains one or more places relating to respective one or more of the spots along the calculated route. The one or more places have been registered as being visited by the wireless device. An alternative route is then created by replacing one or more of the spots with a respective obtained visited place related to it, and by one or more spots between the current location and the replaced spots removed.

According to a second aspect, the object is achieved by a wireless device for determining a route between a current location and a destination location. The wireless device comprises a position unit configured to establish the current location and an input unit configured to obtain destination location of the wireless device. The wireless device further comprises a processing unit configured to calculate a route from the current location to the destination location. The route comprises a number of spots. Further the wireless device comprises an obtaining unit configured to obtain one or more places relating to respective one or more of the spots along the calculated route. The one or more places has been registered as being visited by the wireless device. The wireless device further comprises a creating unit configured to create an alternative route by replacing one or more of the spots with a respective obtained visited place related to it, and to remove one or more spots between the current location and the replaced spots.

According to a third aspect, the object is achieved by a computer program product comprising a computer usable medium having computer program logic stored therein to enable a control unit of a wireless device to perform establishing the current location, and obtaining the destination location of the wireless device. The computer program product further comprises to calculate a route from the current location to the destination location, which route comprises a number of spots. Further performed by obtaining one or more places related to respective one or more of the spots along the calculated route. The one or more places has been registered as being visited by the wireless device. An alternative route is created by replacing one or more of the spots with a respective obtained visited place related to it, and removing one or more spots between the current location and the replaced spots.

Since known places and directions are being replaced in the way of an alternative route, and by removing the unknown spots, the alternative route will be more effective and enhanced for the user of the wireless device.

### BRIEF DESCRIPTION OF THE DRAWINGS

Figure 1 is a schematic block diagram depicting a wireless device in a communication system,
Figure 2 is a schematic block diagram depicting the wireless device,
Figure 3 is a flow chart of the method for determining an alternative route,
Figure 4 is a schematic block diagram of possible sources for obtaining registered visited places,
Figure 5 is a flow chart of depicting a method in embodiments of a method in a wireless device,
Figure 6 is a schematic block depicting a CD-Rom as a computer program product.

### DETAILED DESCRIPTION OF PREFERRED EMBODIMENTS

The present invention will now be described more fully with reference to the accompanying drawings, in which embodiments of the invention are shown.

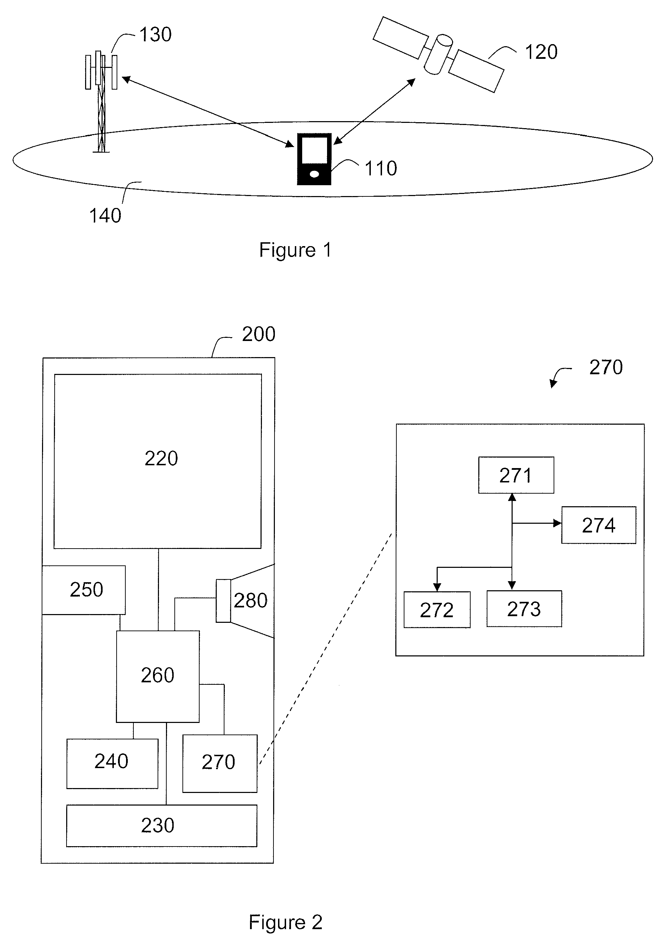

**Figure 1** discloses a schematic overview of a communication system comprising a wireless device **110**, such as a mobile terminal or the like. As used herein, a "wireless device"110 includes, but is not limited to, a device that is configured to receive/transmit communication signals via a wire/line connection, such as via a public-switched telephone network (PSTN), digital subscriber line (DSL), digital cable, or another data connection/network, and/or via a wireless interface with, for example, a cellular network, a satellite network, a wireless local area network (WLAN), and/or another wireless device110.

Examples of wireless devices 110 include, but are not limited to, a cellular telephone, personal data assistant (PDA), pager, and/or a computer that is configured to communicate data over a wireless communication interface that can include a cellular telephone interface, a Bluetooth interface, a wireless local area network interface (e.g., 802.11), another RF communication interface, and/or an optical/infra-red communication interface. As used herein, wireless device may be portable, transportable, installed in a vehicle (aeronautical, maritime, or land-based), or situated and/or configured to operate locally and/or in a distributed fashion at any other location(s) on earth and/or in space. The wireless device 110 is configured to communicate data over a direct wireless communication interface, by use of one or more cellular base stations 130, and/or over another wireless communication interface through a wireless local area network (WLAN) router. Further the wireless device 110 is configured to use a positioning system **120** e.g. a satellite based Global Positioning System (GPS), in order to use the wireless device 110 for positioning and navigation.

When the wireless device 110 determines a route, it establishes a current location and obtains a destination location. Based on these locations the route will be calculated by use of an electronic positioning system, rendering a number of spots along the calculated route. The number of spots is compared randomly with obtained registered known visited one or more places, automatically rendering an alternative route by replacing the spots. Further one or more of the spots and the replaced spots are removed in order to display a short describing route based on registered visited places. The feature of an automatically creating an alternative route based on registered visited places enhances the functionality of the wireless device 110, for example, it makes the wireless device 110 more attractive and useful.

The wireless device 110 may comprise an electronic positioning module that forms a part of a radiotelephone communication system as illustrated in **Figure 1**. The communication system may comprise a base station transceiver and an electronic positioning functionality. The base station 130 comprises a radio transceiver that defines an individual cell in a cellular network and communicates with the wireless device 110 in the cell using a radio-link protocol. The electronic positioning system may use satellites to ensure the locations of the spots and the places. It will be understood that, in some embodiments of the present solution, the places may be obtained and accessed from different sources where the wireless device 110 has a registered history.

Referring now to **Figure 2**, illustrating an example of the wireless device 110 which e.g. may comprises a portable housing assembly **200**, a display **220**, a user interface, that is, a man machine interface (MMI), a speaker **280**, that is, a sound transducer, and input unit **230**, such as a keypad, a control unit **260**, a communication module **250**, a memory **240**, and an electronic positioning system **270**. The foregoing components of the wireless device 110 may be included in many conventional wireless devices and their functionality is generally known to those skilled in the art. The wireless device 110 further comprises one or more applications, which may be stored in the memory **240**.

The display 220 may be any suitable display screen assembly. For example, the display screen 220 may be a liquid crystal display (LCD) with or without auxiliary lighting (e.g., a lighting panel).

The user interface may include any suitable input units(s) 230 including, for example, a touch activated or touch sensitive device, for example, a touch screen wherein the display is combined with the input unit, a joystick, a keyboard/keypad, a dial, a directional key or keys, and/or a pointing device, such as a mouse, trackball, touch pad, etc. The speaker 280 generates sound responsive to an input audio signal. The user interface can also include a microphone coupled to an audio processor that is configured to generate an audio data stream responsive to sound incident on the microphone.

The control unit 260 may support various functions of the wireless device 110 and may be any commercially available or custom microprocessor/CPU, for example. In use, the control unit 260 of the wireless device 110 generates a display image on the display 220 and/or audio data on the speaker 280.

The memory 240 may be configured to store digital information signals and data such as digital media signals, digital media files, for example, digital audio signals, digital images, digital video clips and/or digital audio files, short digital wave files. The memory 240 also stores phonebook contact list or similar and a set of configured locations related to the contacts which are to be used by the present solution. Further, the memory 240 may store registered visited places.

The communication module 250 is configured to communicate data over one or more wireless interfaces to. The communication module 250 may include a cellular communication module, a direct point- to-point connection module, a WLAN module and an electronic positioning system module.

With a cellular communication module, the wireless device 110 may communicate via the base station(s) 130 of a network using one or more cellular communication protocols such as, for example, Advanced Mobile Phone Service (AMPS), ANSi-136, Global Standard for Mobile (GSM) communication, General Packet Radio Service (GPRS), enhanced data rates for GSM evolution (EDGE), code division multiple access (CDMA)5 wideband-CDMA, CDMA2000, and Universal Mobile Telecommunications System (UMTS). The cellular base stations may be connected to a Mobile Telephone Switching Office (MTSO) wireless network, which, in turn, can be connected to a PSTN and/or another network.

The communication module 250 comprises an electronic positioning module 270 to e.g. enable communication with a satellite 120 in order to locate the wireless device 110 while moving. The electronic positioning module 270 may be a complete receiver in the communication module 250. It may also be situated external of the communication module in the wireless device. It may also be externally of the housing 200 and be connected to with wire or through a short range transmitter and receiver, such as a Bluetooth transmitter and receiver, or the alike. Another solution is to use a wireless-assisted positioning system where satellites 120 are used in conjunction with information about the wireless devices 110 signal. Further the communication module 250 comprises a transceiver typically having a transmitter circuit and a receiver circuit, which respectively transmit outgoing radio frequency signals, for example, to the network, a router or directly to another wireless device 110, and receive incoming radio frequency signals, for example, from the network, a router or directly to another wireless device 110, such as voice and data signals, via an antenna. The antenna may be an embedded antenna, a retractable antenna or any antenna known to those having skill in the art without departing from the scope of the present solution. The radio frequency signals transmitted between the wireless device 110 and the network, router or other wireless devices 110 may include both traffic and control signals, for example, paging signals/messages for incoming calls, which are used to establish and maintain communication with another party or destination.

The radio frequency signals may also include packet data information, such as, for example, cellular digital packet data (CDPD) information. In addition, the transceiver may include an infrared (IR) transceiver configured to transmit/receive infrared signals to/from other communicating wireless devices via an IR port.

The electronic positioning system 270 may comprise a processing unit 271, a creating unit 272, the positioning unit 273 and an obtaining unit 274.

The wireless device 110 may comprise further components such as a camera device configured to generate a still image and/or video data stream based on incident light.

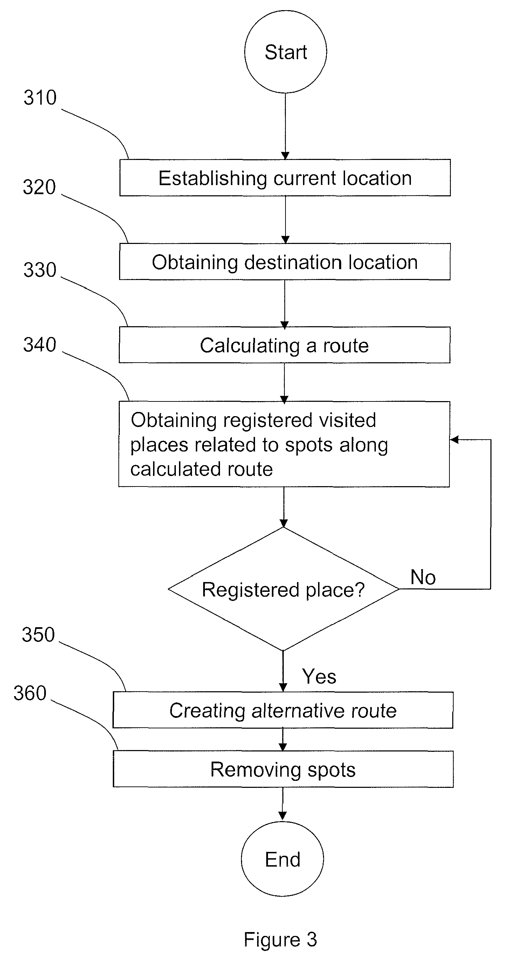

In **Figure 3**, a schematic flowchart of the method for calculating an alternate route based on registered visited location shown. The method comprises the following steps which steps do not have to be taken in the order described below, but in any suitable order.

A visualizing scenario is Rob, who lives in Stockholm, and who is going to visit his new girlfriend Jane, who lives in Malmö.

In **step 310** a current location of the wireless device 110 is established by retrieving the current location of the wireless device 110. This may be obtained from the electronic positioning system 270.

In our scenario, Rob activates the electronic positioning system 270 in the wireless device 110 which thereby establishes the current location as being Kammakargatan in Stockholm.

In **step 320** the wireless device 110 obtains the destination location of the wireless device 110. This may be obtained from the input unit 230 into which the user of the wireless device 110 may input his/her destination.

Here in our scenario Rob enters, through the input unit 230, the destination location which is Ringgatan in Malmö.

In **step 330**, a route from the current location to the destination location is calculated by the positioning system 270. The calculated route comprises a number of spots along the route, which related location and mapping data may be obtained from a location and map source. Optionally more than one route may be calculated with regards to e.g. shortest distance, shortest distance using large roads, and fastest route.

Based on these two locations will the electronic positioning system 270 calculate a route which will involve, in our scenario, at least 30 different places.

In **step 340**, one or more places are obtained relating to respective one or more of the spots along the calculated route. The one or more places has been registered as being visited by the wireless device 110. The one or more registered visited places may be obtained from a number of sources such as;
- by means of an electronic positioning system 270,
- a wireless local area network, a Bluetooth network, and/or a cell that the wireless device 110 has been registered in,
- places where a registered credit card has been used,
- registered event history and/or registered calendar appointments,
- registered logins on social location applications,
- registrations through speech recognition, and
- in the memory 240 of the wireless device 110.

The sources are further discussed below.

The spots are compared with the registered places in a randomly process until all calculated spots are compared.

Back to our scenario, the at least 30 places are compared with those places that Rob has been to before with the wireless device 110. Rob is a regular user of the social network Foursquare and login whenever he goes to a new place, therefore will Foursquare be a source where Robs known places can be retrieved, apart from the regular sources such as the internal memory. It shall be noted that this is an example of source that can be used among others as described before. As Rob has been travelling to nearby cities to Malmö by car and to Malmö itself by train he has some registered places through his wireless device 110.

In **step 350**, an alternative route is created by replacing one or more of the spots with a respective obtained visited place related to it.

A describing example is that the road junction Kungsgatan / Sveavägen may be replaced with the Concert Hall of Stockholm, since the Concert Hall of Stockholm is situated near the road junction of Kungsgatan / Sveavägen.
In our scenario, as Rob has visited places along the road to Malmö, will those be replaced with such as Saab Scania in Södertälje, Restaurant Gyllene Uttern outside of Gränna, Eurostop in Jönköping, Strömsnäsbruk, the store Entré in Malmö. This ends up with the following route:

From Kammakargatan Stockholm to Ringgatan in Malmö:
- Drive towards SAAB Scania in Södertälje,
- Continue to drive on E4 towards Helsingborg,
- Drive towards Restaurant Gyllene Uttern, Gränna,
- Continue to drive on E4 towards Eurostop in Jönköping,
- Keep driving on E4 towards Strömsnäsbruk,
- Keep driving on E4 towards Helsingborg,
- When reaching Helsingborg drive E6 towards Malmö,
- When reaching Akarp outside Malmö turn right and continue on Stockolmsvägen,
- End of Stockholmsvägen Entré is sightable follow signs to Värnhemstorget,
- Turn right to Ostra Förstadsgatan and then right again,
- Reached destination.

In **step 360**, one or more spots are removed between the current location and the replaced spots. This will display a simplified route with few places which has been visited by the wireless device 110.

A conclusion in our scenario will be that this simplified route is displayed on Rob's wireless device:

From Kammakargatan Stockholm to Ringgatan in Malmö:
- Drive towards SAAB Scania in Södertälje,
- Continue to drive on E4 towards Helsingborg,
- Keep driving on E4 towards Helsingborg,
- When reaching Helsingborg drive E6 towards Malmö,
- When reaching Akarp outside Malmö turn right and continue on Stockolmsvägen,
- End of Stockholmsvägen Entré is sightable follow signs to Värnhemstorget,
- Turn right to Ostra Förstadsgatan and then right again,
- Reached destination.

The step 360 is further discussed below.

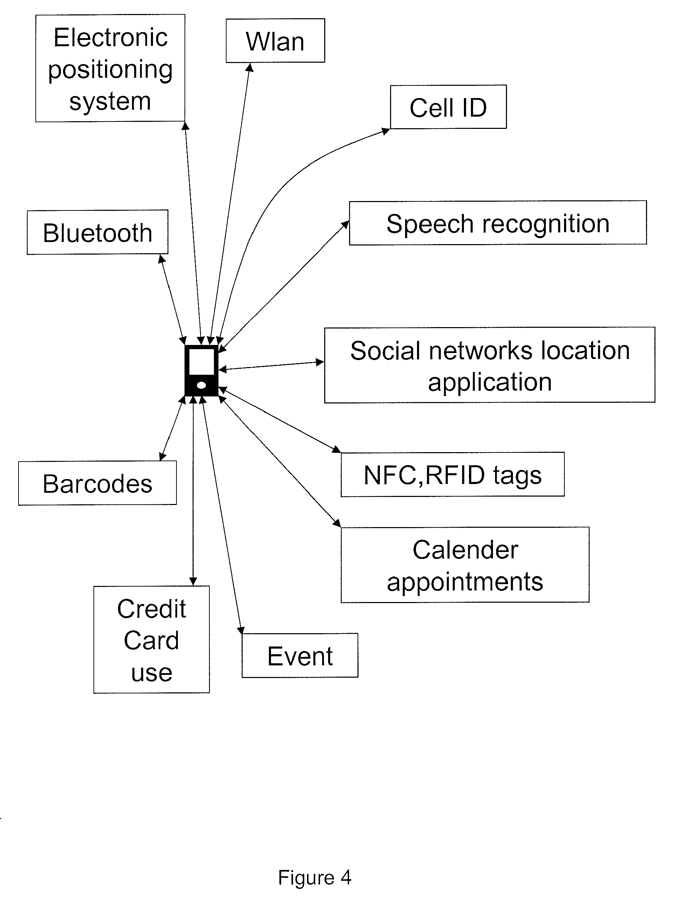

**Figure 4** shows an example of a number of sources externally of the wireless device 110 that may be accessed to obtain the registered visited places. Figure 4, focuses on step 340 regarding obtaining registered visited places as being visited by the wireless device 110,

Such an external source is the electronic positioning system, which may be a system which uses satellites and/or Wireless Local Area Networks, (Wlan), when retrieving locations. Further sources as shown in Figure 4, are the cell ids related to locations which are related to where the wireless device 110 has been registered.

A credit card may be used on different places and thereby be registered and be retrieved if the credit card is registered to be accessible from the wireless device 110.

Event history, events related to appointments in a calendar history, e.g. Outlook calendar may also be source for locations to be retrieved.

Different social networks are today an effective source for location history. Such social networks may be Facebook, Gowalla, and Foursquare. Within Google, with a connection to Google Maps, is a feature called Google Location History which also may be useful to retrieve. The social networks may have a built in location generator registrating the places where the login has been done to the networks.

Other sources may be registered visited places accessed through Near Field Communication (NFC), Radio-Frequency Identification (RFID) tags, Bluetooth, and barcodes.

Another possible source is that during a voice communication, such as a phone call, obtains registered visited places through speech recognition when such a place is mentioned.

The registered visited places are mainly obtained from stored data in the memory of the wireless device 110 or from a removable memory such as SIM-card, memory stick or the like. It is also obtained from external sources such as servers, databases, related to the wireless device 110 and through other networks accessed through the Internet.

In some embodiments of the present solution the alternate route is calculated such so that it may be adapted to be shared between at least two wireless devices 110 in order to display the same alternative route based on the registered visited places they both know.

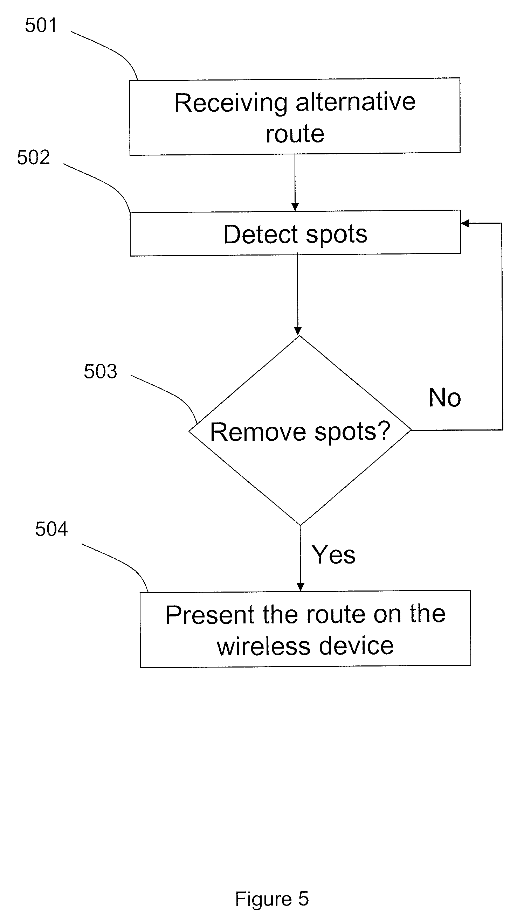

Referring now to **Figure 5** that shows a flow chart of an example of the step of 350 and 360 of removing spots. The method comprises the following steps which steps do not have to be taken in the order described below, but in any suitable order.

In **step 501** the created alternative route is received according to step 350 in **Figure 3**, wherein the calculated spots are replaced with the obtained referring registered visited places.

In **step 502** the numbers of remaining spots are detected.

In **step 503** it is decided which spots that is to be removed, if any. There is a great probability that there are spots that shall be removed. This process may be performed done randomly until all spots have been evaluated.

In **step 504** the number of spots, which are replaced by places, will be heavily reduced. Thus, the displayed route, that is presented on the wireless device 110, will be known and therefore be optimal to navigate after (as shown by our scenario before).

In order to perform the method for determining a route between a current location and a destination location, the wireless device 110, comprises a position unit 273 configured to establish the current location and an input unit 230 configured to obtain destination location of the wireless device 110, as depicted in figure 2. The wireless device 110 comprises a processing unit 271 configured to calculate a route from the current location to the destination location. The route comprises a number of spots.

Further the wireless device 110 comprises an obtaining unit 274 configured to obtain one or more places relating to respective one or more of the spots along the calculated route. The one or more places has been registered as being visited by the wireless device 110.

The wireless device 110 comprises a creating unit 272 configured to create an alternative route by replacing one or more of the spots with a respective obtained visited place related to it, and to remove one or more spots between the current location and the replaced spots.

In some embodiments, the control unit 260 in the wireless device enables the obtaining unit 274 to obtain registered visited places.

In some embodiments, the obtaining unit 274 obtains registered visited places that are stored in a memory 240 of the wireless device 110 and/or at databases and servers at a number of external sources.

In some embodiments, the obtaining unit 274 obtains registered visited places from a wireless local area network, a Bluetooth network, and/or a cell that the wireless device 110 has been registered in.

In some embodiments, the obtaining unit 274 obtains registered visited places of the use of a registered credit card.

In some embodiments, the obtaining unit 274 obtains registered visited places from registered event history and/or registered calendar appointments.

In some embodiments, the obtaining unit 274 obtains registered visited places from registered logins on social location applications.

In some embodiments, the obtaining unit 274 obtains registered visited places from registrations through speech recognition.

In some embodiments, the creating unit 272 removes zero, one or more spots from the alternative route.

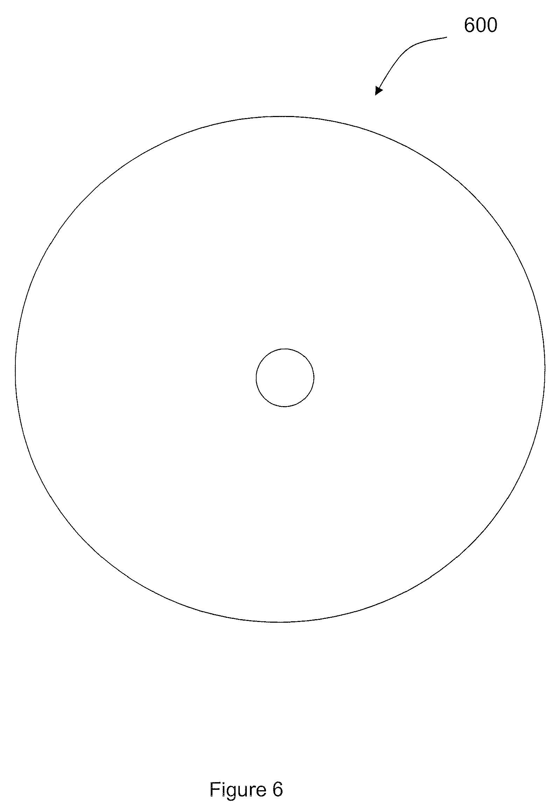

In addition, a computer program product is provided comprising a computer usable medium **600** as depicted by **Figure 6** having computer program logic stored therein to enable a control unit of a wireless device 110 to perform establishing the current location, and obtaining the destination location of the wireless device 110, which enables to calculate a route from the current location to the destination location, which route comprises a number of spots. Further performing by obtaining one or more places relating to respective one or more of the spots along the calculated route, which one or more places has been registered as being visited by the wireless device 110. An alternative route is created by replacing one or more of the spots with a respective obtained visited place related to it, and removing one or more spots between the current location and the replaced spots.

In some embodiments, the registered visited places are obtained by means of an electronic positioning system 270.

In some embodiments, the obtained registered visited places are stored at a memory 240 of the wireless device 110 and/or from databases and servers at a number of external sources, such as wireless local area networks, cells, Bluetooth, logins on social location applications.

In some embodiments, the removing step is performed on the basis of the alternative route, removing zero, one or more spots.

However, this invention should not be construed as limited to the embodiments set forth herein. Rather, these embodiments are provided so that this disclosure will be thorough and complete, and will fully convey the scope of the invention to those skilled in the art. Like numbers refer to like elements throughout.

As used herein, the term "comprising" or "comprises" is open-ended, and includes one or more stated features, integers, elements, steps, components or functions but does not preclude the presence or addition of one or more other features, integers, elements, steps, components, functions or groups thereof.

As used herein, the term "and/or" includes any and all combinations of one or more of the associated listed items.

The terminology used herein is for the purpose of describing particular embodiments only and is not intended to be limiting of the invention. As used herein, the singular forms "a", "an" and "the" are intended to include the plural forms as well, unless the context clearly indicates otherwise.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It will be understood that when an element is referred to as being "coupled" or "connected" to another element, it can be directly coupled or connected to the other element or intervening elements may also be present. In contrast, when an element is referred to as being "directly coupled" or "directly connected" to another element, there are no intervening elements present. Furthermore, "coupled" or "connected" as used herein may include wirelessly coupled or connected.

Well-known functions or constructions may not be described in detail for brevity and/or clarity.

The present invention may be embodied as methods, electronic devices, and/or computer program products. Accordingly, the present invention may be embodied in hardware and/or in software (including firmware, resident software, micro-code, etc.), which may be generally referred to herein as a "circuit" or "module". Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate, propagate, or transport the program for use by or in connection with the instruction execution system, apparatus, or device.

Embodiments according to the present invention are described with reference to block diagrams and/or operational illustrations of methods and wireless devices 110. In this regard, each block may represent a module, segment, or portion of code, which comprises one or more executable instructions for implementing the specified logical function(s). It is to be understood that each block of the block diagrams and/or operational illustrations, and combinations of blocks in the block diagrams and/or operational illustrations, can be implemented by radio frequency, analog and/or digital hardware, and/or program instructions. These program instructions may be provided to a controller, which may include one or more general purpose processors, special purpose processors, ASICs, and/or other programmable data processing apparatus, such that the instructions, which execute via the controller and/or other programmable data processing apparatus, create means for implementing the functions/acts specified in the block diagrams and/or operational block or blocks. In some alternate implementations, the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved.

These computer program instructions may also be stored in a computer-usable or computer-readable memory that may direct a computer or other programmable data processing apparatus to function in a particular manner, such that the instructions stored in the computer usable or computer-readable memory produce an article of manufacture including instructions that implement the function specified in the flowchart and/or block diagram block or blocks. The computer-usable or computer-readable medium may be, for example but not limited to, an electronic, magnetic, optical, electromagnetic, infrared, or semiconductor system, apparatus, device, or propagation medium. More specific examples (a nonexhaustive list) of the computer-readable medium include the following: hard disks, optical storage devices, a transmission media such as those supporting the Internet or an intranet, magnetic storage devices, an electrical connection having one or more wires, a portable computer diskette, a random access memory (RAM), a read-only memory (ROM), an erasable programmable read-only memory (EPROM or Flash memory), an optical fiber, and a compact disc read-only memory (CD-ROM). Computer program code for carrying out operations of the present invention may be written in an object oriented programming language such as Java(R), Smalltalk or C++. However, the computer program code for carrying out operations of the present invention may also be written in conventional procedural programming languages, such as the "C" programming language and/or a lower level assembler language. It will be further appreciated that the functionality of any or all of the program modules may also be implemented using discrete hardware components, one or more application specific integrated circuits (ASICs), or a programmed digital signal processor or microcontroller.
In drawings and specification and specification, there have been disclosed exemplary embodiments of the invention. However, many variations and modifications can be made to these embodiments without substantially departing from the principles of the present solution. Accordingly, although specific terms are employed, they are used in a generic and descriptive sense only and not for the purposes of limitation, the scope of the invention being defined by the following claims.

## Claims

1. A method in a wireless device (110) for determining a route between a current location of the wireless device (110) and a destination location, the method comprising:
*establishing* (310) the current location of the wireless device (110),
*obtaining* (320) the destination location of the wireless device (110),
*calculating* (330) a route from the current location to the destination location, which route comprises a number of spots,
*obtaining* (340) one or more places relating to respective one or more of the spots along the calculated route, which one or more places has been registered as being visited by the wireless device (110),
*creating* (350) an alternative route by replacing one or more of the spots with a respective obtained visited place related to it, and
*removing* (360) one or more spots between the current location and the replaced spots.

2. The method of claim 1, wherein the registered visited places are obtained by means of an electronic positioning system (270).

3. The method of any of the claims 1-2, wherein the obtained registered visited places comprises a wireless local area network, a Bluetooth network, and/or a cell that the wireless device (110) has been registered in.

4. The method of any of the claims 1-3, wherein the obtained registered visited places comprises places where a registered credit card has been used.

5. The method of any of the claims 1-4, wherein the obtained registered visited places comprises registered event history and/or registered calendar appointments.

6. The method of any of the claims 1-5, wherein the obtained registered visited places comprises registered logins on social location applications.

7. The method of any of the claims 1-6, wherein the obtained registered visited places comprises registrations through speech recognition.

8. The method according to claim 1, wherein zero, one or more spots are removed from the alternate route.

9. A wireless device (110) for determining a route between a current location and a destination location, comprising:
*a position unit* (273) configured to establish the current location of the wireless device (110),
*input unit* (230) configured to obtain destination location of the wireless device (110),
*a processing unit* (271) configured to calculate a route from the current location to the destination location, which route comprises a number of spots,
*a obtaining unit* (274) configured to obtain one or more places relating to respective one or more of the spots along the calculated route, which one or more places has been registered as being visited by the wireless device (110),
*a creating unit* (272) configured to create an alternative route by replacing one or more of the spots with a respective obtained visited place related to it, and to remove one or more spots between the current location and the replaced spots.

10. The wireless device (110) according to claim 9, wherein a control unit (260) enables the obtaining unit (274) to obtain registered visited places.

11. The wireless device (110) according to any of the claims 9 and 10, wherein the obtaining unit (274) obtains registered visited places that are stored in a memory (240) of the wireless device (110) and/or at databases and servers at a number of external sources.

12. The wireless device (110) according to any of the claims 9 - 11, wherein the obtaining unit (274) obtains registered visited places from a wireless local area network, a Bluetooth network, and/or a cell that the wireless device (110) has been registered in.

13. The wireless device (110) according to any of the claims 9 - 12, wherein the obtaining unit (274) obtains registered visited places of the use of a registered credit card.

14. The wireless device (110) according to any of the claims 9 - 13, wherein the obtaining unit (274) obtains registered visited places from registered event history and/or registered calendar appointments.

15. The wireless device (110) according to any of the claims 9 - 14, wherein the obtaining unit (274) obtains registered visited places from registered logins on social location applications.

16. The wireless device (110) according to any of the claims 9 - 15 wherein the obtaining unit (274) obtains registered visited places from registrations through speech recognition.

17. The wireless device (110) according to any of the claims 9 - 16, wherein the creating unit (272) removes zero, one or more spots from the alternative route.

18. A computer program product comprising a computer usable medium having computer program logic stored therein to enable a control unit of a wireless device (110) to perform the steps of
*establishing* the current location of the wireless device (110),
*obtaining* the destination location of the wireless device (110),
*calculating* a route from the current location to the destination location, which route comprises a number of spots,
*obtaining* one or more places relating to respective one or more of the spots along the calculated route, which one or more places has been registered as being visited by wireless device (110),
*creating* an alternative route by replacing one or more of the spots with a respective obtained visited place related to it, and
*removing* one or more spots between the current location and the replaced spots.

19. A computer program product according to claim 22, wherein the registered visited places is obtained by means of an electronic positioning system (270).

20. A computer program product according to any of claim 22 and 23, wherein the obtained registered visited places are stored at a memory (240) of the wireless device (110) and/or from databases and servers at a number of external sources, such as wireless local area networks, cells, Bluetooth, logins on social location applications.

21. A computer program product according to any of claims 22 - 24, wherein the removing step is performed on the basis of the alternative route, removing zero, one or more spots.
